**Europäisches Patentamt**

**European Patent Office**

**Office européen des brevets**

(19)

(11) Veröffentlichungsnummer : **0 419 722 B1**

(12) # EUROPÄISCHE PATENTSCHRIFT

(45) Veröffentlichungstag der Patentschrift :
**30.12.92 Patentblatt 92/53**

(51) Int. Cl.⁵ : **B60H 1/00**

(21) Anmeldenummer : **89118081.2**

(22) Anmeldetag : **29.09.89**

(54) **Heiz- oder Klimaanlage zur Belüftung des Fahrgastraums eines Kraftfahrzeugs.**

(43) Veröffentlichungstag der Anmeldung :
**03.04.91 Patentblatt 91/14**

(45) Bekanntmachung des Hinweises auf die
Patenterteilung :
**30.12.92 Patentblatt 92/53**

(84) Benannte Vertragsstaaten :
**DE ES FR IT**

(56) Entgegenhaltungen :
**EP-A- 0 272 789**
**DE-A- 3 730 466**
**US-A- 4 434 932**
**US-A- 4 537 245**
**PATENT ABSTRACTS OF JAPAN vol. 8, no.**
**234 (M-334)(1671) 26 Oktober 1984, & JP-A-59**
**114110 (NIPPON RADIATOR K.K.) 02 Juli1984,**

(56) Entgegenhaltungen :
**PATENT ABSTRACTS OF JAPAN vol. 13, no. 6**
**(M-781)(3354) 09 Januar 1989, & JP-A-63**
**219414 (AISIN SEIKI CO. LTD.) 13September**
**1988,**
**PATENT ABSTRACTS OF JAPAN vol. 9, no. 34**
**(M-357)(1757) 14 Februar 1985, & JP-A-59**
**176109 (MATSUSHITA DENKI SANGYO K.K.)05**
**Oktober 1984,**
**PATENT ABSTRACTS OF JAPAN vol. 9, no.**
**206 (M-406)(1929) 23 August 1985, & JP-A-60**
**67213 (HITACHI SEISAKUSHO K.K.) 17April**
**1985,**

(73) Patentinhaber : **SIEMENS**
**AKTIENGESELLSCHAFT**
**Wittelsbacherplatz 2**
**W-8000 München 2 (DE)**

(72) Erfinder : **Müller, Otto, Dipl.-Ing.**
**Ziegelhüttenweg 130**
**W-8601 Sesslach (DE)**

EP 0 419 722 B1

**Beschreibung**

Heiz- oder Klimaanlage zur Belüftung des Fahrgastraums eines Kraftfahrzeugs

Die Erfindung bezieht sich auf eine Heiz- oder Klimaanlage zur Belüftung des Fahrgastraums eines Kraftfahrzeugs gemäß Oberbegriff des Anspruchs 1; eine derartige Belüftungsanlage ist z.B. durch PATENT ABSTRACTS OF JAPAN, JP-A-59 114110 bekannt.

Im vorgenannten bekannten Fall wird aufgrund einer entsprechenden Belegungsmeldung der Belegungssensoren zur Schonung der Batterie die Luftzufuhr durch die Luftaustrittsöffnungen gesperrt, die den nicht belegten Sitzen zugeordnet sind.

Durch die US-A-4 434 932 ist eine Heiz- und Klimaanlage der eingangs genannten Art bekannt, bei der zum Ausgleich einer Temperaturdifferenz den belegten Sitzen ein entsprechend verstärkter und den nicht belegten Sitzen ein verminderter Luftstrom zugeordnet wird.

Bei einer durch die DE-A1-37 30 466 bekannten Belüftungsanlage mit über eine Regelvorrichtung automatisch geregelter Lufttemperatur und angepaßter Luftmenge und Luftverteilung zum Fahrgastraum des Fahrzeuges dienen die Düsen in der Mittelebene (Armaturenbrett) des Fahrzeuges vor allem im Kühlbetrieb zur direkten Anströmung der Wageninsassen mit kühler Luft. Es ist auch bekannt, zusätzlich zu den Düsen in der Mittelebene gegebenenfalls noch Seitendüsen im hinteren Teil des Fahrgastraums und-/oder eine im Bereich des Kardanwellentunnels im Fondraum angeordnete Düse zur gezielten Kühlung der hinten sitzenden Fahrgäste vorzusehen.

Von der vorzugsweise elektronischen Regelvorrichtung werden in einem geschlossenen Regelkreis gemäß einem vorgegebenen Programm abhängig von an einem Bediengerät im Armaturenbrett vorgebbaren Temperatur-Sollwerten einerseits und von verschiedenen Temperatursensoren, insbes. von Temperatur-Sensoren für die Außenluft, für die Innenluft sowie für die Ausblasluft aus einer zentralen Mischkammer des Klimagerätes abgegebenen Istwerten u.a. die Gebläsedrehzahl eines die Luft fördernden Gebläses und damit die Luftmenge, Luftverteilerklappen und damit die Luftverteilung in Mittelebene bzw. Fußraum bzw. Defrost sowie eine Mischluftklappe in einem mit Kalt- und/oder Warmluft beströmten Mischraums und damit die Lufttemperatur automatisch eingestellt; während des Aufheiz- bzw. Abkühlbetriebes, insbesondere bei großer Soll-Ist-Temperaturdifferenz, kann es im Fahrgastraum zu von bestimmten Fahrgästen als unangenehm empfundenen Zugerscheinungen kommen, wenn von der Regelung z.B. die Luftaustrittsöffnungen der Mittelebene (Armaturenbrett) beaufschlagt sind und die Gebläsedrehzahl zur möglichst schnellen Angleichung der Ist-Innentemperatur an die vorgegebene Soll-Innentemperatur erhöht und/oder die Temperatur des Luftstroms zusätzlich erniedrigt wird. Zu von bestimmten Fahrgästen als unkomfortabel empfundenen Zugerscheinungen kann es auch dann kommen, wenn bei z.B. individueller Regelungs-Sollwertvorgabe im linken bzw. rechten oder vorderen bzw. hinteren Fahrgastraum aufgrund einer vorherigen Fahrt eine Regelungseinstellung übernommen wird, die der unterschiedlichen nachfolgenden Besetzung des Fahrzeuges nicht optimal angepaßt ist.

Ausgehend von der vorher erläuterten Ursache für einen nicht von allen Fahrgästen als optimal empfundenen Belüftungskomfort, insbesondere bei hoher positiver Soll-Ist-Temperaturdifferenz und zu deren Ausregelung an sich vorteilhaftem maximalen Luftdurchsatz, können die von einzelnen Fahrgästen, vorzugsweise bei nicht voll besetztem Fahrgastraum, als störend empfundenen Zugerscheinungen trotz hohen Luftdurchsatzes mit einfachen Mitteln bei einer Belüftungsanlage der eingangs genannten Art durch die Lehre des Anspruchs 1 vermieden werden; vorteilhafte Ausgestaltungen dieser Lösung sind jeweils Gegenstand der Unteransprüche.

Durch die erfindungsgemäße Einstellabhängigkeit der Regelvorrichtung von den Sitzpositionen jeweils zugeordneten Sitz-Belegungssensoren kann bei großen positiven Soll-Ist-Temperaturdifferenzen, wenn sich z.B. nur der Fahrer im Fahrgastraum befindet, in vorteilhafter Weise ohne Zugerscheinung für den Fahrer trotzdem eine im Sinne eines maximalen Luftdurchsatzes vorgesehene Luftverteilung bei gegebenenfalls gleichzeitig erhöhter Gebläsedrehzahl und gegenüber der Fahrerposition im Sinne eines schnellen Soll-Ist-Abgleichs erhöhter bzw. erniedrigter Temperatur über die übrigen, den nichtbelegten Sitzpositionen zugeordneten Luftaustrittsöffnungen erfolgen, derart daß z.B. auf der Beifahrerseite zusätzlich die Fußraum-Luftaustrittsöffnungen und evtl. vorhandenen Fondraum-Luftausstrittsöffnungen mit einem höheren Luftvolumenstrom und erhöhter bzw. erniedrigter Temperatur im Vergleich zu den Luftaustrittsöffnungen auf der Fahrerseite beaufschlagt sind; dabei muß zur Erzielung der möglichst schnellen Angleichung der Ist-Innentemperatur an die gewünschte Soll-Innentemperatur der Luftvolumenstrom auf der Fahrerseite nicht auf ein unangenehmes Maß und gegebenenfalls auf unangenehme Temperaturen überhöht verändert werden.

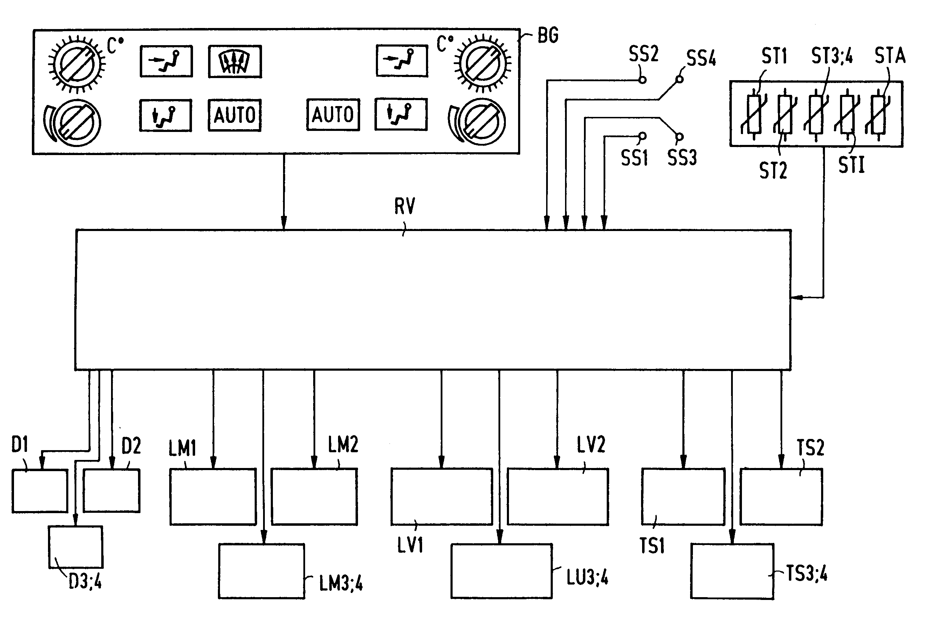

Die Erfindung wird im folgenden anhand einer in der Zeichnung schematisch dargestellten Klimaanlage für ein Kraftfahrzeug näher erläutert.

In einem automatisch, vorzugsweise elektronisch über eine Regelvorrichtung RV geregelten Klimagerät werden die Lufttemperatur im Fahrgastraum eines Kraftfahrzeuges in einem geschlossenen Regelkreis entsprechend vorgegebenen Sollwerten, insbesondere einer oder mehrerer Isttemperaturen geregelt und nach einem von der elektronischen Regelschaltung vorgegebenen Programm dazu u.a. die jeweilige Temperatur der durch Luftaustrittsöffnungen austretenden Luftströme, die Gebläsedrehzahl und die Luftverteilerklappen automatisch eingestellt. Als Eingangsgrößen für die Regelschaltung dienen die von dem oder den Fahrzeuginsassen über zu betätigende Einstellelemente vorgebbaren Sollwerte sowie Istwert-Signale von verschiedenen Sensoren, insbes. von Temperatur-Sensoren für die Außenluft, für die Innenluft im Fahrgastraum und für die Ausblasluft in den zentrischen Luftkanälen des Klimagerätes.

Im einzelnen sind an einem Bediengerät BG am Armaturenbrett des Fahrzeuges jeweils ein Drehschalter zur Einstellung der Gebläsedrehzahl bzw. der gewünschten Innentemperatur für die linke Fahrzeug-Innenraumseite bzw. für die rechte Fahrzeug-Innenraumseite sowie mehrere Tasten zur Einstellung der Luftverteilung von Hand und einer Automatiktaste zur Umschaltung auf eine allein automatische Klimatisierung vorgesehen. Die im Automatikbetrieb getrennt für die linke und die rechte Fahrgastraumseite jeweils einstellbare Innentemperatur ist als Sollwert einer Regelvorrichtung RV vorgebbar, die weiterhin eingangsseitig Istwerte u.a. von einem Sensor STI für die Innentemperatur, einem Sensor STA für die Außentemperatur, einem Sensor ST1 für die Ausblastemperatur der Luftaustrittsöffnungen vorn links, einem Sensor ST2 für die Ausblastemperatur der Luftaustrittsöffnungen vorn rechts und einem Sensor ST3;4 für die Ausblastemperatur der Luftaustrittsöffnungen hinten Mitte erhält. Die Sensoren ST1;ST2;ST3;4 erfassen dabei an zentralen Luftkammerstellen die Temperatur des jeweiligen gesamten linken bzw. rechten bzw. hinteren Luftstroms, d.h. vor dessen Aufteilung z.B. in die Fußtaum- bzw. Mittel- bzw. Scheibenebene.

Zum aktiven Teil der Belüftungsanlage zählen weiterhin ein Luftmengensteller LM1 für die Luftaustrittsöffnungen vorn links, ein Luftmengensteller LM2 für die Luftaustrittsöffnungen vorn rechts sowie ein Luftmengensteller LM3 für die Luftaustrittsöffnungen hinten Mitte, weiterhin ein Luftverteilungssteller LV1 für die Luftaustrittsöffnungen vorn links, ein Luftverteilungssteller LV2 für die Luftaustrittsöffnungen vorn rechts sowie ein Luftverteilungssteller LV3;4 für die Luftaustrittsöffnungen hinten Mitte und schließlich ein Temperatursteller TS1 für die Luftaustrittsöffnungen vorn links, ein Temperatursteller TS2 für die Luftaustrittsöffnungen vorn rechts sowie ein Temperatursteller TS3;4 für die Luftaustrittsöffnungen hinten Mitte; zusätzlich ist in einer Override-Funktion jeweils eine Absperrklappe zur mehr oder weniger weiten Öffnung der Mittelebenen-Ausströmdüsen D1 (vorn links), D2 (vorn rechts) sowie D3;4 (hinten Mitte) vorgesehen.

Erfindungsgemäß werden im Automatikbetrieb von der Regelvorrichtung RV die Luftmengensteller LM1;LM2;LM3;4 bzw. die Luftverteilungssteller LV1; LV2;LV3;4 bzw. die Temperatursteller TS1;TS2;TS3;4 individuell im Sinne eines möglichst schnellen Luftdurchsatzes zur Erzielung der gewünschten Innentemperatur ohne Zugerscheinung für die besetzten Fahrsitzpositionen dadurch erreicht, daß der Regelvorrichtung RV durch Sitzsensoren SS1 für den Fahrersitz, SS2 für den Beifahrersitz, SS3 für den Fondsitz hinter dem Fahrer und SS4 für den Fondsitz hinter dem Beifahrer jeweils die belegten bzw. unbelegten Sitzpositionen als Istwert vorgegeben werden und eine Belüftungsregelung im Sinne eines maximalen Luftdurchsatzes bei dazu optimaler Luftverteilung über die den nichtbelegten Sitzposition zugeordneten Luftaustrittsöffnungen eingestellt wird.

Als Drucksensoren SS1 bis SS4 sind nach einer Ausgestaltung der Erfindung entweder von den jeweils die Sitzposition einnehmenden Fahrgästen druckbetätigte Belegungssensoren oder von den Fahrgästen durch Lichtschranken-Unterbrechung lichtbetätigbare Belegungssensoren oder automatisch bei einer Gurtbetätigung ausgelöste Belegungssensoren vorgesehen.

Durch die Erfassung der Zahl und der Position der jeweils gerade im Fahrgastraum vorhandenen Fahrzeug-Insassen und der Belegungsauswertung durch die Elektronik können die jeweiligen Luftmengen- bzw. Luftverteilungs- bzw. Temperaturstellglieder für die Luftaustrittsöffnungen der nichtbesetzten Fahrzeugplätze in einem für eine möglichst schnelle Ausregelung optimalen Stellzustand gebracht werden und die Luftmengen- bzw. Luftverteilungs- bzw. Temperaturstellglieder der besetzten Sitzpositionen entsprechend den Sollvorgaben der Regelung und gegebenenfalls der in Override-Funktion vorgesehenen individuellen Einstellungen durch die Fahrzeug-Insassen im Sinne eine von Zug- und von unangenehmen Kälte-bzw. Wärmegefühlen freien Luftströmung eingestellt werden. Zweckmäßigerweise werden dabei noch bestehende Einstellungen für die nicht besetzten Sitzpositionen durch die Vorgabe der automatischen Regelung überspielt; dazu zählt insbesondere die automatische Öffnung einer gegebenenfalls noch geschlossenen Absperrklappe in einer Mittelebenen-Ausströmdüse D1 bzw.D2 bzw. D3;4 für eine zuvor belegte; jedoch nunmehr freie Sitzposition.

## Patentansprüche

1. Heiz- oder Klimaanlage zur Belüftung des Fahrgastraumes eines Kraftfahrzeugs mit mehreren, verschiedenen Sitzpositionen der Fahrzeuginsassen zugeordneten Luftaustrittsöffnungen mit zugehörigen, über eine Regelvorrichtung (RV) betätigbaren Verstellgliedern für die Luftmenge (LM1;LM2;LM3/4) und/oder die Luftverteilung (LV1;LV2;LV3/4) und/oder die Lufttemperatur (TS1;TS2;TS3,4), **gekennzeichnet** durch eine Einstellabhängigkeit der Regelvorrichtung (RV) von den Sitzpositionen jeweils zugeordneten Sitz-Belegungssensoren (SS1;SS2;SS3;SS4), derart daß die den belegten Sitzpositionen zugeordneten Luftaustrittsöffnungen mit einer jeweils fahrgastspezifischen und die den nichtbelegten Sitzpositionen zugeordneten Luftaustrittsöffnungen mit einer davon abweichenden, im Sinne eines möglichst schnellen Soll-Ist-Abgleichs der Innentemperatur fahrgastraumoptimalen Luftströmung beschickt sind.

2. Heiz- oder Klimaanlage nach Anspruch 1, **gekennzeichnet** durch eine im Sinne eines erhöhten Luftdurchsatzes vorgesehene Luftverteilung über die den nichtbelegten Sitzpositionen zugeordneten Luftaustrittsöffnungen.

3. Heiz- oder Klimaanlage nach Anspruch 1 und/oder 2, **gekennzeichnet** durch eine im Sinne eines möglichst schnellen Soll-Ist-Abgleichs der Innentemperatur veränderter Temperatur der Luftströme der den nicht belegten Sitzpositionen zugeordneten Luftaustrittsöffnungen.

4. Heiz- oder Klimaanlage nach zumindest einem der Ansprüche 1 bis 3, **gekennzeichnet** durch eine Luftmengenerhöhung (Gebläsedrehzahlerhöhung) der den nicht belegten Sitzpositionen zugeordneten Luftaustrittsöffnungen.

5. Heiz- oder Klimaanlage nach zumindest einem der Ansprüche 1 bis 4, **gekennzeichnet** durch druckbetätigbare Belegungssensoren.

6. Heiz- oder Klimaanlage nach zumindest einem der Ansprüche 1 bis 4, **gekennzeichnet** durch lichtbetätigbare Belegungssensoren.

7. Heiz- oder Klimaanlage nach zumindest einem der Ansprüche 1 bis 4, **gekennzeichnet** durch gurtbetätigbare Belegungssensoren.

**Claims**

1. Heating or air-conditioning system for ventilating the passenger compartment of a motor vehicle having, associated with various seat positions of the vehicle occupants, several seat-occupation sensors (SS1; SS2; SS3; SS4) and air outlet openings with appertaining adjusting elements which can be operated by way of a control arrangement (RV) for the air quantity (LM1; LM2; LM3/4) and/or the air distribution (LV1; LV2; LV3/4) and/or the air temperature (TS1; TS2; TS3/4), characterised by a dependence, in terms of adjustment, of the control arrangement (RV) upon the seat-occupation sensors (SS1; SS2; SS3; SS4) associated with respective seat positions such that the air outlet openings associated with the occupied seat positions are fed with an air flow which, in each case, is specific to the passenger and the air outlet openings which are associated with the non-occupied seat positions are fed with an air flow which differs therefrom and which, in the sense of an as rapid as possible target value-actual value equalization of the internal temperature, is optimum for the passenger compartment.

2. Heating or air-conditioning system according to claim 1, characterised by an air distribution, which is provided in the sense of an increased air throughput, by way of the air outlet openings associated with the non-occupied seat positions.

3. Heating or air-conditioning system according to claim 1 and/or 2, characterised by a temperature of the air flows of the air outlet openings which are associated with the non-occupied seat positions, which temperature is varied in the sense of an as rapid as possible target value-actual value equalization of the internal temperature.

4. Heating or air-conditioning system according to at least one of the claims 1 to 3, characterised by an increase in air quantity (blower speed increase) of the air outlet openings which are associated with the non-occupied seat positions.

5. Heating or air-conditioning system according to at least one of the claims 1 to 4, characterised by occupation sensors which can be operated by pressure.

6. Heating or air-conditioning system according to at least one of the claims 1 to 4, characterised by occupation sensors which can be operated by light.

7. Heating or air-conditioning system according to at least one of the claims 1 to 4, characterised by occupation sensors which can be operated by belts.

**Revendications**

1. Installation de chauffage ou de climatisation servant à aérer l'habitacle d'un véhicule automobile, comportant plusieurs capteurs (SS1;SS2;SS3; SS4) d'occupation des sièges, associés à différentes positions assises des passagers, et plusieurs ouvertures de sortie de l'air comportant des éléments de réglage associés, qui peuvent être actionnés par l'intermédiaire d'un dispositif de réglage (RV), pour la quantité d'air (LM1;LM2;LM3/4) et/ou la répartition de l'air (SB1;SB2;SB3/4) et/ou la température de l'air (TS1;TS2;TS3,4), caractérisée par le fait que le réglage effectué par le dispositif de réglage (RV) dépend des capteurs (SS1;SS2;SS3;SS4) d'occupation des sièges, qui sont associés respectivement aux positions des sièges de sorte que les ouvertures de sortie de l'air, associées aux positions de sièges occupés, sont respectivement alimentées par un courant d'air spécifique aux passagers et que les ouvertures de sortie de l'air, associées aux positions de siège non occupées, sont alimentées par un courant d'air qui diffère du précédent et qui est optimal pour l'habitacle dans le sens d'une égalisation aussi rapide que possible valeur de consigne-valeur réelle de la température intérieure.

2. Installation de chauffage ou de climatisation suivant la revendication 1, caractérisée par une répartition de l'air, qui est prévue dans le sens d'un débit accru d'air, entre les ouvertures de sortie de l'air associées aux positions des sièges non occupés.

3. Installation de chauffage ou de climatisation suivant la revendication 1 et/ou 2, caractérisée par une température, qui est modifiée dans le sens d'un équilibrage aussi rapide que possible valeur de consigne-valeur réelle de la température intérieure, des courants d'air des ouvertures de sortie de l'air associées aux positions des sièges non occupés.

4. Installation de chauffage et de climatisation suivant au moins l'une des revendications 1 à 3, caractérisée par une augmentation de la quantité d'air (augmentation de la vitesse de rotation du ventilateur) des ouvertures de sortie de l'air associées aux positions des sièges non occupés.

5. Installation de chauffage et de climatisation suivant au moins l'une des revendications 1 à 4, caractérisée par des capteurs d'occupation pouvant être actionnés par une pression.

6. Installation de chauffage et de climatisation suivant au moins l'une des revendications 1 à 4, caractérisée par des capteurs d'occupation actionnés par une lumière.

7. Installation de chauffage et de climatisation suivant au moins l'une des revendications 1 à 4, caractérisée par des capteurs d'occupation actionnés par une ceinture.